# FASCICULE DE BREVET EUROPEEN

(11) **EP 2 951 063 B1**
(45) Date de publication et mention de la délivrance du brevet: **24.10.2018**
(21) Numéro de dépôt: 14705845.7
(22) Date de dépôt: 30.01.2014
(51) Int. Cl.: B60R 99/00, B60R 16/037, B60Q 3/80, B60N 2/02, B60N 2/879, B60H 1/00

(54) **PROCEDE DE COMMANDE D'ORGANES FONCTIONNELS D'UN VEHICULE POUR GENERER DIFFERENTES AMBIANCES MULTISENSORIELLES DANS LE VEHICULE**
VERFAHREN ZUR STEUERUNG VON FUNKTIONSELEMENTEN EINES FAHRZEUGS ZUR ERZEUGUNG VERSCHIEDENER MULTISENSORISCHER UMGEBUNGEN IM FAHRZEUG
METHOD FOR CONTROLLING FUNCTIONAL MEMBERS OF A VEHICLE IN ORDER TO GENERATE VARIOUS MULTI-SENSORY ENVIRONMENTS IN THE VEHICLE

(30) Priorité: 01.02.2013 FR 1350867
(43) Date de publication de la demande: 09.12.2015
(73) Titulaire: PSA Automobiles SA, 78300 Poissy (FR)
(72) Inventeur: LECOMTE-FOUSSET, Bastien, F-78210 St Cyr L Ecole (FR); SADIK-ROZSNYAI, Orsolya, F-92400 Courbevoie (FR)
(86) Numéro de dépôt international: PCT/FR2014/050163
(87) Numéro de publication internationale: WO 2014/118467

(56) Documents cités:
- EP-A1- 0 661 101
- DE-A1- 10 334 587
- DE-A1- 19 651 403
- US-A1- 2006 235 753
- Anonymous: "Bose surround sound hits the road", , 22 décembre 2010 (2010-12-22), XP055078311, Extrait de l'Internet: URL:http:/web.archive.org/web/201012221824 32/http://www.bose.com/controller?event=VI EW_STATIC_PAGE_EVENT&url=/learning/feature d_stories/feat_auto_surround.jsp [extrait le 2013-09-09]

## Description

La présente invention concerne un procédé de commande d'organes fonctionnels d'un véhicule, notamment d'un véhicule automobile, pour générer différentes ambiances multi sensorielles dans ledit véhicule.

Elle concerne également un véhicule mettant en oeuvre un tel procédé.

Les organes fonctionnels d'un véhicule, tels que des actionneurs, sont généralement associés à des équipements, tels qu'un siège, un groupe de climatisation, etc.

La présente invention est basée sur une approche multisensorielle capable d'apporter au conducteur et aux passagers du véhicule des sensations diverses adaptées à leur état émotionnel.

Dans la littérature académique marketing, le concept d'expérience client offerte par une approche multisensorielle attire de plus en plus l'attention.(ex. Joy, Sherry, 2003, Hulten, 2011)

Ainsi, pour la définition même de l'expérience, Joy et Sherry (2003), reprend celle de l' « American Héritage Dictionary », la définissant comme « la perception d'un objet ou une émotion par les sens ou de l'esprit», mettant en avant le rôle joué par les sens.

Quant à l'expérience multisensorielle, elle a lieu lorsque plus d'un des cinq sens (la vue, l'ouïe, l'odorat, le goût et le toucher) contribue à la perception de l'expérience sensorielle (Hulten et al. 2009).

La construction d'une telle expérience (Hulten 2011) trouve un terrain tout à fait adapté dans le cadre de la conception d'un nouveau produit destiné à la grande consommation.

L'expérience multisensorielle ainsi construite peut impacter l'état émotionnel et l'humeur du client selon Hulten (2011) qui a recensé plusieurs éléments confirmant cette approche.

Ainsi, il a été observé que le son véhicule des émotions et des sensations (Garlin, Owen 2006, Sweeney, Wyber 2002), le sens du toucher véhicule des sensations par rapport au produit (Peck, Wiggins 2006, Citrin et al. 2003) et la vue joue un rôle primordial dans la perception du produit (Orth and Malkewitz 2008, Smith, Burns 1996). Quant à l'expérience olfactive, l'odorat impacte l'humeur permet en particulier de procurer une sensation de plaisir et de bien-être (Fiore et al. 2000, Goldkuhl, Styfven, 2007).

Le bien-être peut être défini comme un état agréable résultant de la satisfaction du corps et du calme de l'esprit (source Larousse).

On connaît, notamment du document DE102004038061, un système de commande permettant d'ajuster différents éléments fonctionnels tels que des éléments de commandes des actionneurs de réglage associés au siège, au volant et au pédalier, au chauffage du siège et à la climatisation de l'habitacle.

Au moins deux paramètres liés au bien être de l'utilisateur sont combinés et peuvent être activés par l'utilisateur à partir de symboles tactiles.

Cependant, ce système ne traite ni le son, ni l'ambiance lumineuse à bord du véhicule et ne sollicite donc ni le sens de l'ouïe, ni le sens de la vue.

On connait également du document US2006/235753A1, un procédé conforme au préambule de la revendication 1.

Cependant, ce procédé ne permet pas aux occupants du véhicule d'utiliser le système de manière personnalisée.

La présente invention vise à pallier ces inconvénients.

A cet effet, l'invention a pour premier objet, un procédé de commande d'un ensemble d'organes fonctionnels et équipements associés d'un véhicule, conforme à la partie caractérisante de la revendication 1.

Selon une caractéristique, le scénario sélectionné est paramétrable en fonction des préférences de l'utilisateur.

Selon une autre caractéristique, le procédé consiste à activer le scénario quand l'utilisateur entre ou s'apprête à rentrer dans le véhicule.

La présente invention a pour second objet, un véhicule comportant un ensemble d'organes fonctionnels et équipements associés, ledit ensemble comportant un premier organe comportant au moins un siège motorisé, disposé dans une zone déterminée de l'habitacle du véhicule, ledit siège étant apte à prendre plusieurs positions déterminées, un deuxième organe générateur de son comportant des haut-parleurs aptes à sonoriser une ou plusieurs zones déterminées du véhicule, un troisième organe générateur de lumière comportant des moyens d'éclairage aptes à éclairer une ou plusieurs zones déterminées du véhicule, et un quatrième organe de traitement de l'air de l'habitacle comportant un diffuseur d'au moins une fragrance dans l'habitacle apte à être couplé au dispositif de climatisation et de ventilation du véhicule, ledit véhicule comportant en outre un organe de commande apte à piloter chacun des premier, deuxième, troisième et quatrième organes de manière coordonnée pour créer une ambiance déterminée à l'intérieur du véhicule ; ledit organe de commande implémentant un scénario prédéfini et paramétrable, et au moins une interface homme machine couplée à l'organe de commande permettant à au moins un utilisateur du véhicule de communiquer avec ledit organe de commande pour paramétrer et piloter ledit scénario.

Selon une caractéristique du véhicule, le siège et le scénario associé au siège sont sélectionnables à partir d'un menu affichable par l'interface homme machine.

Selon une autre caractéristique, les haut-parleurs répartis dans l'habitacle et aptes à sonoriser tout ou partie de l'habitacle, et les haut-parleurs disposés dans la partie du siège formant appui-tête, sont aptes à répartir spatialement le son dans l'habitacle entre les haut-parleurs de l'habitacle et les haut-parleurs du siège.

Selon une autre caractéristique, les moyens d'éclairage comportent des moyens d'éclairage répartis dans l'habitacle et des moyens d'éclairage disposés sur les rétroviseurs extérieurs du véhicule.

Selon une autre caractéristique, le véhicule comporte en outre un dispositif de dépollution de l'habitacle comportant un dispositif de purification de l'air à l'intérieur de l'habitacle et/ou un dispositif de désinfection des surfaces à l'intérieur de l'habitacle.

L'objectif de la présente invention est de proposer des prestations multisensorielles aux occupants d'un véhicule, prestations qui sont aptes à procurer une sensation de bien-être aux occupants.

Pour cela, quatre (la vue, l'ouïe, l'odorat et le toucher) des cinq sens sont tous sollicités suivant un enchaînement coordonné et prédéfini d'actions mettant en oeuvre des organes fonctionnels et équipements associés du véhicule.

Ainsi, le véhicule est utilisé comme le théâtre d'opérations dont le déroulement respecte un programme prédéfini par les passagers, programme qui est adapté à l'état émotionnel et l'humeur des passagers du véhicule.

Dans la suite de la description, on utilisera le terme « scénario » pour désigner un enchaînement de phases offrant différentes prestations sensorielles.

Les prestations offertes par le véhicule ont pour objectif final d'impacter l'état émotionnel ou l'humeur des occupants du véhicule, en leur offrant une sensation de bien-être aussi bien quand le véhicule est à l'arrêt, à travers notamment des programmes de relaxation ou de travail, que lorsqu'il est en marche à travers notamment des programmes dynamisants.

Ces prestations permettent aux occupants de vivre un changement d'état avant de prendre la route, et de bénéficier d'un accompagnement pendant la conduite ou de simplement utiliser leur véhicule comme simple «sas» de décompression.

L'invention sera mieux comprise et d'autres avantages ressortiront à la lecture de la description qui suit, donnée uniquement à titre d'exemple non limitatif et faite en référence aux dessins sur lesquels :
- la figure 1 illustre par un schéma bloc, les différents organes mis en oeuvre par le procédé selon l'invention ;
- la figure 2 illustre une vue partielle de l'intérieur de l'habitacle d'un véhicule automobile et l'emplacement des équipements mis en oeuvre par le procédé selon l'invention ;
- les figures 3A à 3D illustrent respectivement les différents parties du sièges et fonctions équipant le siège mises en oeuvre par le procédé selon l'invention ; et
- la figure 4 illustre les différentes phases d'un exemple de scénario implémenté par le procédé selon l'invention.

Sur les figures, les mêmes références numériques désignent les mêmes éléments.

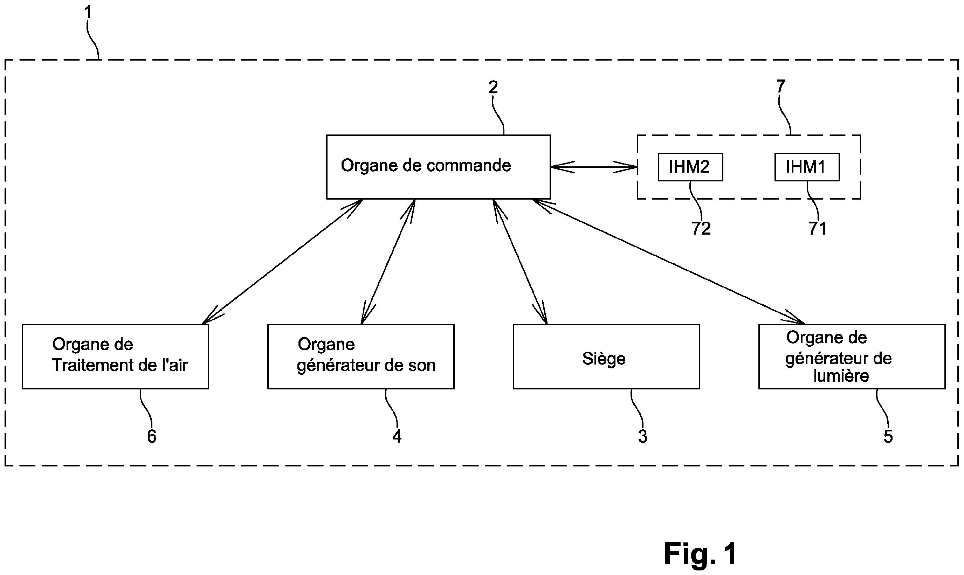

En référence aux figures 1, le véhicule 1 selon l'invention comporte un organe de commande 2 couplé à un calculateur du véhicule, non représenté. Cet organe de commande 2 gère des données spécifiques au véhicule 1 et celles programmées par l'utilisateur (conducteur ou autre occupant du véhicule) en relation avec les données spécifiques au véhicule 1.

Il pilote et coordonne des organes fonctionnels 3 à 5 et leurs équipements associés concernés présents dans le véhicule 1, en fonction d'un scénario prédéfini sélectionné par l'utilisateur.

Le premier organe fonctionnel 3 est constitué principalement d'un siège. Il excite, avec le groupe de climatisation et de ventilation, le sens du toucher.

Le deuxième organe fonctionnel 4 est un organe générateur de son qui excite le sens de l'ouïe.

Le troisième organe fonctionnel 5 est un organe générateur de lumière qui excite le sens de la vue et le quatrième organe fonctionnel 6 est un organe de traitement de l'air contenu à l'intérieur de l'habitacle excitant le sens de l'odorat.

Le scénario se décompose en plusieurs phases successives et à chaque phase correspond une ou plusieurs actions à réaliser au cours d'un temps, ou durée, déterminé comportant des états transitoires et des états stabilisés qui sont paramétrables par l'utilisateur.

D'autres données sont paramétrables par l'utilisateur, comme par exemple, le niveau sonore, le niveau de luminosité, la mémorisation des positions des sièges, ...

Les données paramétrées par l'utilisateur sont saisies via des interfaces homme machine (IHM) 7, comportant par exemple un terminal de communication mobile désigné par la suite par « Smartphone » 71 (typiquement un téléphone portable doté de fonctions de communication, utilisant des réseaux tels que Bluetooth ou Wi-Fi, et de géolocalisations) et un écran tactile 72, 82 disposé dans la planche de bord du véhicule 1 et apte à relayer le Smartphone 71 quand l'utilisateur est à l'intérieur du véhicule 1. Dans une variante, c'est l'écran 81 du Smartphone 71 qui fait office d'écran tactile de commande à l'intérieur du véhicule ; le Smartphone 71 étant alors reçu dans un berceau couplé à l'organe de commande 2.

Ces IHM 7 comportent des interfaces graphiques intuitives pour permettre de sélectionner, paramétrer et piloter aisément un scénario via l'organe de commande 2, soit depuis le Smartphone 71, soit depuis l'écran tactile 72 présent dans le véhicule 1 soit depuis les deux.

Ces IHM 7 sont aptes à être synchronisées avec l'organe de commande 2.

Ces interfaces 7 entre l'utilisateur et le véhicule 1 permettent à l'utilisateur de sélectionner un scénario, paramétrer le scénario, lancer le scénario, interrompre le scénario, consulter l'état des organes et le déroulement du scénario. Le scénario peut être sélectionné, paramétré et piloté à distance par le Smartphone 71 via une application dédiée.

Pour mettre en oeuvre un scenario dit de « bien-être », le procédé selon l'invention exploite les fonctionnalités des organes 3 à 6 et équipements associés qui sont présents dans ou sur le véhicule 1 et qui sont aptes à exciter de manière coordonnée l'ensemble des quatre sens déjà cités ci-dessus pour chacune des phases du scénario.

Certains de ces organes 3 à 6 et équipements associés offrent déjà des prestations standards d'autres sont dédiées au scénario « bien-être » mais toutes les prestations sont coordonnées par l'organe de commande 2 en vue de répondre au scenario « bien-être » qui a été programmé.

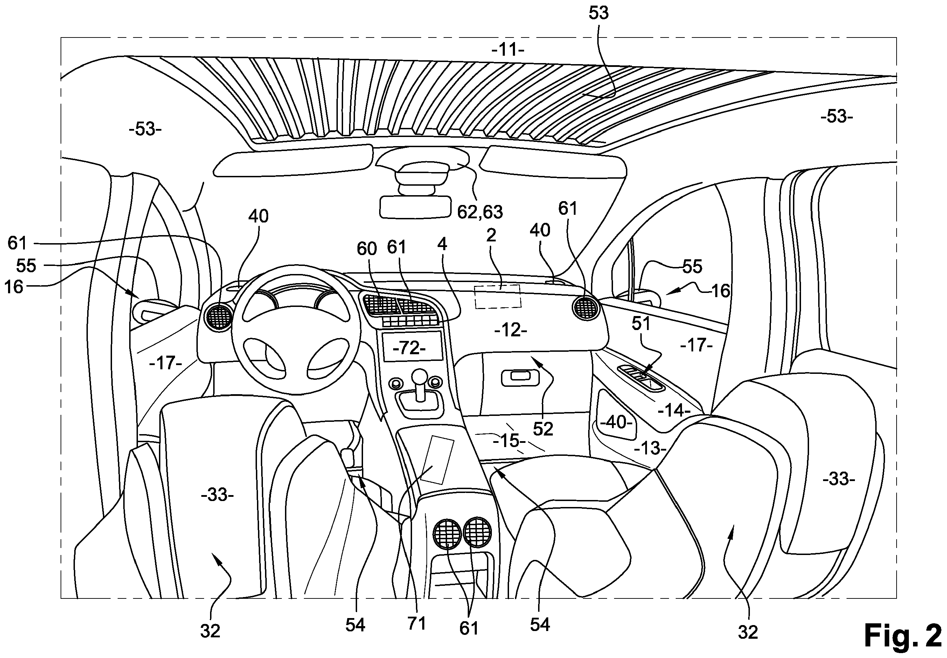

La figure 2 illustre une vue partielle de l'intérieur de l'habitacle d'un véhicule automobile 1 et l'emplacement des principaux équipements associés aux organes 3 à 6 participant de manière organisée au scénario « bien-être ».

Les principaux équipements du véhicule 1 participant activement au scénario sont les sièges 30 du véhicule et plus particulièrement les sièges avant (dits de rang 1).

Cela étant, on peut considérer un seul siège 30 essentiellement celui du conducteur ou l'ensemble de tous les sièges, ceux de rang 1, les sièges arrières dits de rang 2 voire de rang supérieur non représentés.

Dans la suite de la description, un seul siège 30 sera décrit.

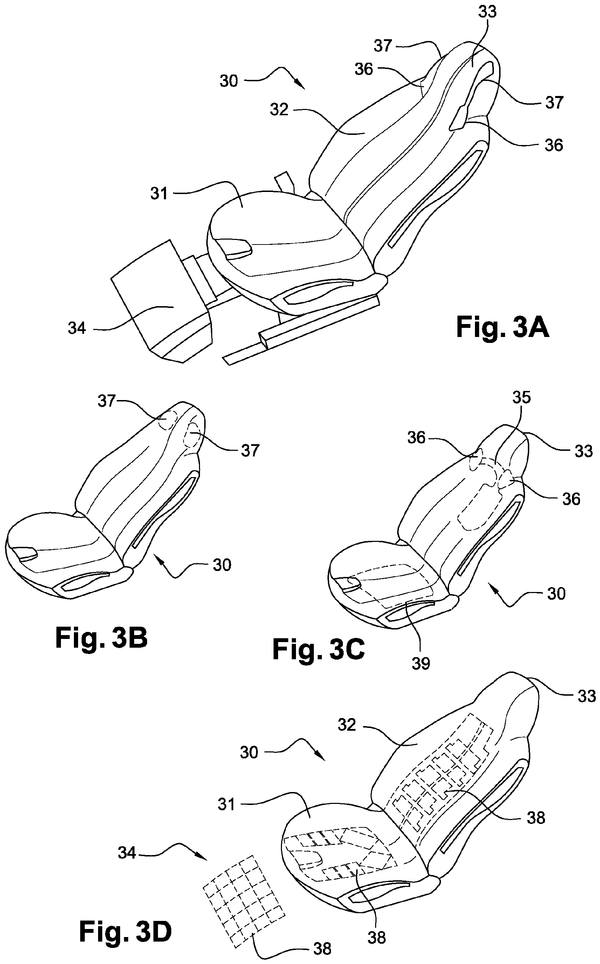

Le siège 30 est illustré en détails aux figures 3A à 3D.

Le siège 30 contribue à lui-seul à la sensation de confort en excitant principalement le sens du toucher via le maintien du corps dans le siège 30, le chauffage et les pressions exercées localement sur différentes parties du corps via des moyens de massage localisés dans les différentes parties du siège 30.

Il contribue donc fortement à l'excitation de l'organe du toucher 3.

Le siège 30 comporte une assise 31, un dossier 32 et une fonction appui-tête 33 rapportée sur la partie supérieure du dossier 32 ou prolongeant la partie supérieure du dossier 32.

Le siège 30 est motorisé et est apte à prendre différentes positions, par exemple trois positions correspondant respectivement aux trois phases du scénario (par exemple : accueil, relaxant, dynamisant) qui sont décrites ci-après ; positions qui sont mémorisables et paramétrables en fonction du gabarit et/ou des préférences de l'occupant.

Le siège 30 comporte en outre un repose-mollet 34 qui est apte à se déployer progressivement entre une position dite de repos dans laquelle il est rétracté sous l'assise 31 et une position déployée dite active dans laquelle il vient en contact avec les mollets de l'occupant du siège 30 quand le siège 30 passe progressivement d'une position assise (dossier 32 sensiblement droit) à une position de relaxation (dossier 32 incliné vers l'arrière).

Le siège 30 comporte des moyens de chauffage localisés dans le repose mollet 34 et l'assise 31.

De plus, la partie haute du dossier, au voisinage de la fonction appui-tête 33, comporte des conduits d'amenée 35 d'un flux d'air chaud dans le dossier 32 et une paire d'ouïes 36 de sortie d'air, intégrées dans la partie haute du dossier 32 et agencée de manière à propager un flux d'air chaud entre la nuque et les épaules de l'occupant du siège 30. L'air chaud provient d'un organe de chauffage 60 du véhicule typiquement le groupe de climatisation et de ventilation du véhicule 1. L'assise 31 du siège 30 est également équipée de moyens de chauffages localisés 39.

La partie haute du dossier 30 comporte également une paire de haut-parleurs 37, disposée au-dessus des ouïes de chauffage 36.

Le siège 30 comporte en outre des moyens de massage 38 intégrés dans le dossier 32, l'assise 31 et le repose-mollet 34. Ces moyens de massage 38 sont pilotés et coordonnés suivant des programmes adaptés aux différentes phases du scénario.

Pour compléter l'approche multi sensorielle, afin d'exciter le sens de la vue, l'organe de commande 2 active l'organe générateur de lumière 5 comportant des moyens d'éclairage 50 qui sont disposés dans différentes zones de l'habitacle et notamment au niveau du pavillon 11, de la planche de bord 12, des panneaux de porte 13, des accoudoirs 14, sous et/ou atour de l'assise 31 du siège 30, la cave à pieds 15, etc.

L'implantation des différents moyens d'éclairage 50, leur activation sélective la forme des faisceaux lumineux produits, le type d'éclairage : direct, indirect, diffus, continu, progressif, la couleur et l'intensité lumineuse de chacun de ces moyens 50 sont aptes à créer des jeux de lumière participant à la création d'ambiances adaptées aux différentes phases du scénario : accueil, relaxant et dynamisant.

Les moyens d'éclairage 50 comportent par exemple une source de lumière couplée à un ou plusieurs guides de lumière ou plusieurs sources de lumière agencées sous forme de rampes, bandes lumineuses 51 ou jonc lumineux 52 équipés notamment d'une série de LEDs (acronyme anglo-saxon pour Light-emitting Diode).

Des rampes lumineuses 53 sont rapportées sous le pavillon 11 et sont aptes à diffuser une lumière indirecte au-dessus de la tête des occupants.

Les bandes 51 et joncs lumineux 52 permettent de souligner certaines parties de l'habitacle comme la planche de bord 12, les accoudoirs 14 de portes, les appui-tête 33 des sièges 30, ...

Des moyens d'éclairage 54 sont également disposés à la base du siège 30, sous et/ou autour l'assise du siège et/ou dans la cave à pieds 15 pour créer une impression de profondeur et de flottement de l'occupant du siège 30 en position de relaxation.

Les rétroviseurs extérieurs 16 sont également équipés de moyens d'éclairage 55 qui sont activés notamment dans la phase d'accueil du scénario « bien-être » pour indiquer que le véhicule 1 est prêt à recevoir les occupants et les inviter à ouvrir les portes 17. Cette phase est décrite en détail ci-après.

Le troisième sens, l'ouïe, est excité par l'organe générateur de son 4, typiquement l'autoradio du véhicule qui génère des séquences musicales qui sont diffusées soit par les haut-parleurs 40 de l'habitacle soit par la paire de haut-parleurs 37 disposées dans l'appui-tête 33 du siège 30, soit par les deux.

La paire de haut-parleurs 37 coopère avec les autres haut-parleurs 40 du véhicule habituellement utilisés pour sonoriser l'habitable. La paire de haut-parleur 37 permet de diffuser des séquences musicales adaptées à une phase du scénario et qui peuvent n'être audibles que par l'occupant du siège 30 ; la paire de haut-parleur 37 faisant alors fonction de casque audio.

Le son est distribué à l'intérieur de l'habitacle entre l'ensemble des haut-parleurs 50 de l'habitacle et la paire de haut-parleurs 37 de l'appui-tête 33 pour permettre de diffuser une « nappe » sonore spatialisée adaptée au scénario.

Le choix de la séquence musicale (musique d'ambiance apaisante, ou rythmée dynamisante, rythme et mélodie ...) et son volume sonore sont déterminé en fonction de la phase du scénario et du paramétrage.

Les séquences musicales pour chacune des phases, peuvent être personnalisées par l'utilisateur à partir de « Playlist » dédiées pré enregistrées par l'utilisateur ou par le constructeur.

Une liste d'écoute, aussi appelée « Playlist », sélection musicale ou liste de lecture, est un ensemble de morceaux musicaux ou de fichiers audio/vidéo compilés dans un agrégateur. Ils peuvent être joués séquentiellement, dans un ordre aléatoire ou selon une logique choisie par celui qui l'a composée.

Dans une phase de conduite, l'organe générateur de son 4 est également apte à créer une « coloration sonore » virtuelle numérique du moteur différente de la coloration naturelle du moteur et qui, par exemple, dans une phase dynamisante, peut créer une ambiance sportive de conduite.

Enfin le quatrième sens, l'odorat, est excité par un diffuseur de fragrance 60 permettant de diffuser un parfum d'ambiance à l'intérieur de l'habitacle avant l'entrée de l'utilisateur dans le véhicule 1, ou pendant le déroulement du scénario. Le diffuseur 60 est disposé en sortie du groupe de climatisation et de ventilation 61 de l'habitacle avec lequel il coopère pour une diffusion homogène dans l'habitacle.

Différentes fragrances peuvent être proposées au choix de l'utilisateur dans la phase préparatoire du scénario et pour chacune des phases du scenario.

La sensation de confort olfactif, propice au bien-être, peut être complétée par un dispositif de purification de l'air tel qu'un ioniseur 62 (suppression de mauvaises odeurs et substances gazeuses nocives) et par un dispositif de désinfection 63 de l'habitacle, activé en l'absence d'occupant dans le véhicule, et apte à diffuser une substance désinfectante dans l'habitacle, substance qui par gravité retombe sur toutes les surfaces de l'habitacle. Ces dispositifs 62 et 63 sont couplés au groupe de climatisation et de ventilation 61 du véhicule pour optimiser leurs effets et évacuer les résidus après traitement.

Ils sont commandés par l'organe de commande 2.

Le scénario bien-être, enrichi de ces deux dernières prestations, peut alors être désigné par scénario « santé bien-être ».

Le scénario de santé bien-être, décrit ci-dessus, en mode statique (véhicule à l'arrêt) peut être complété d'une phase dite de confort de conduite en mode dynamique (véhicule roulant) dans laquelle un certain nombre d'équipements d'assistance réunis sous l'acronyme anglo-saxon «ADAS» (Advanced Driver Assistance Systems) peuvent être activés. Ces ADAS permettent d'adapter les caractéristiques dynamiques (suspension, passage de vitesse, accélération, ...) du véhicule en fonction du mode de conduite choisi par l'utilisateur.

Parmi ceux-ci, on peut citer l'amortissement variable : l'ensemble de la suspension du véhicule s'adapte automatiquement en fonction du terrain et/ou du mode de conduite choisi par l'utilisateur, le changement automatique de vitesse : la loi de passage des vitesses est adaptée en fonction du mode de conduite choisi, la direction à assistance électrique : la loi d'assistance permet de durcir ou au contraire d'assouplir l'action de l'assistance au volant, l'accélération : la modification de la cartographie de la pédale d'accélération et éventuellement de celle de l'embrayage permette d'augmenter le brio.

L'organe de commande 2 coordonne l'ensemble des organes 3 à 6 et équipements associés qui viennent d'être décrits tel un chef d'orchestre virtuel.

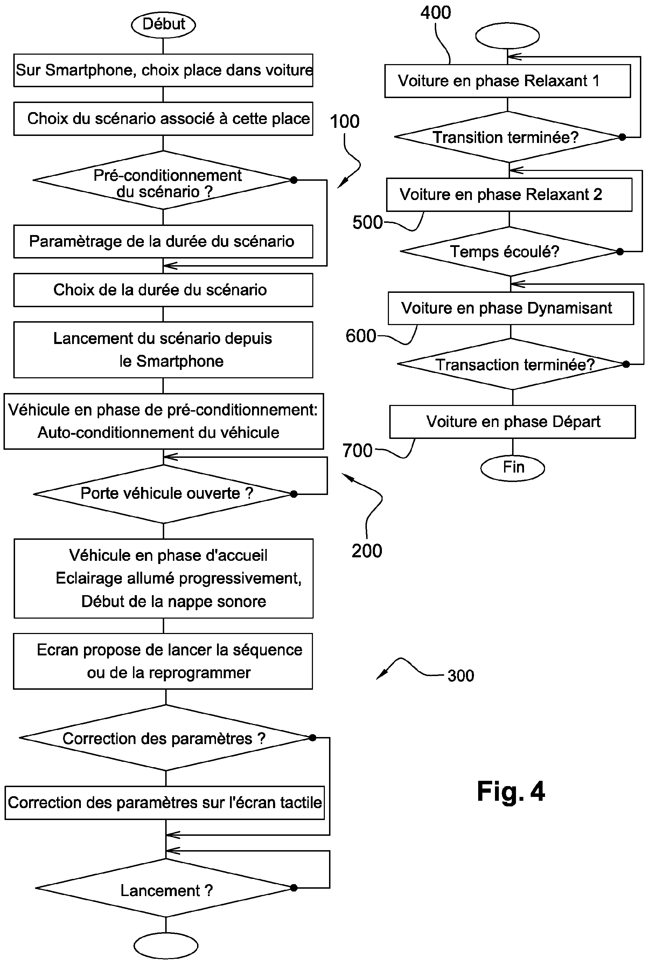

La figure 4 illustre un exemple de scénario dit de relaxation, présenté sous la forme d'un logigramme.

Dans une première phase 100, dite préparatoire, l'utilisateur se trouve à portée de son véhicule 1. Le véhicule 1 est fermé et inoccupé.

A l'aide de son Smartphone 71, ou d'un terminal de communication mobile équivalent, l'utilisateur active une application dédiée au scénario santé bien-être automobile. Cette application lui propose via une interface graphique intuitive, un premier menu à partir duquel il peut sélectionner sa place dans le véhicule 1 : en rang 1, en tant que passager ou conducteur, ou en tant que passager de rang 2.

Il sélectionne ensuite, dans un deuxième menu, une prestation de son choix, qu'il pré-conditionne, par exemple la prestation « relaxante ».

Pour cette prestation, le scénario et donc l'organe de commande 2 du véhicule 1 qui le met en oeuvre, doivent être capables de faire passer progressivement l'utilisateur d'un état a priori stressé à un état de relaxation, puis progressivement d'un état de relaxation à un état dit normal dans lequel il peut soit sortir du véhicule pour reprendre une activité normale soit se préparer à conduire le véhicule.

Pour une prestation déterminée, la phase préparatoire 100 permet à l'utilisateur d'affiner les paramètres des phases proposées par le scénario. Parmi ces paramètres, on peut citer : la durée de la phase relaxante, par exemple 90s, le niveau sonore, le niveau de luminosité, la mémorisation de la position du siège, les « Playlist » ...

Le paramétrage par l'utilisateur est optionnel. Par défaut, le scénario est programmé avec des paramètres standards prédéfinis.

Lorsque l'utilisateur a terminé la phase préparatoire 100, il a la possibilité de transmettre le scénario sélectionné et les paramètres associés, à l'organe de commande 2 du véhicule 1 depuis son Smartphone 71 pour son exécution.

A l'issue de cette phase préparatoire 100, le scénario est initialisé par l'organe de commande 2 mais il n'est pas activé tant que l'utilisateur n'a pas rejoint son véhicule 1.

Cette initialisation se traduit par une deuxième phase 200 dite de préconditionnement des organes 3 à 6 et équipements associés impliqués dans le scénario. En fonction des paramètres du scénario, l'organe de commande 2 auto-configure les organes 3 à 6 et équipements associés du véhicule 1 pour recevoir l'occupant dans les conditions requises par le scénario sélectionné.

Typiquement, pour une prestation de relaxation, l'organe de commande 2 active les moyens de chauffage du siège 39 au maximum puis stabilise le chauffage à une température de consigne paramétrée, pour réchauffer rapidement l'assise 31 du siège 30. De même, l'organe de commande 2 active les moyens de chauffage 36 de la fonction chauffe-nuque 33 pour préchauffer les conduits 35 amenant l'air chaud jusque dans la partie supérieure du dossier 32.

L'organe de commande 2 positionne le siège 30 dans une position différente d'une position de conduite, adaptée pour accueillir l'utilisateur : typiquement, le siège 30 est reculé d'une distance suffisante pour dégager l'espace compris entre la planche de bord 12 et la partie extrême de l'assise 31 du siège 30.

En même temps, l'organe de commande 2 active le diffuseur de fragrance 60 pour diffuser un parfum d'ambiance et/ou le dispositif de purification de l'air 62.

L'organe de commande 2 déclenche l'allumage de moyens d'éclairage 55 disposés sur les rétroviseurs extérieurs 16 pour signaler que le véhicule 1 est prêt à accueillir l'utilisateur et démarrer une deuxième phase dite phase d'accueil.

L'éclairage peut être intermittent tant que la phase de préconditionnement n'est pas terminée et continu quand cette dernière est terminée.

Pendant cette phase de préconditionnement, l'utilisateur s'est rapproché du véhicule et s'apprête à ouvrir une porte. A l'ouverture de la porte, l'organe de commande détecte ladite ouverture et commande le « réveil » du véhicule.

Débute alors une troisième phase 300 dite d'accueil.

Ce « réveil » se traduit par l'activation des moyens d'éclairage 50 disposés dans l'habitacle dans des zones déterminées pour générer des jeux de lumière de couleur et d'amplitude déterminées pour un allumage progressif des lumières et créer une d'ambiance agréable invitant l'utilisateur à pénétrer dans le véhicule 1. En parallèle, et pour compléter cette ambiance conviviale, l'organe de commande 2 déclenche l'émission d'une séquence musicale d'accueil prédéfinie via l'autoradio 4.

L'utilisateur peut alors s'installer dans le siège 30 et l'organe de commande 2 active l'interface homme machine 72 présente dans le véhicule 1, tel qu'un écran tactile disposé sur la planche de bord 12, affichant des informations tactiles de commande du scénario. Ces informations tactiles permettent à l'utilisateur soit de lancer directement la phase « Relaxant 1 » soit de corriger les paramètres saisis précédemment à partir du Smartphone 71 pendant la phase préparatoire (notamment la durée du scénario).

Lorsque l'utilisateur choisit de lancer la phase « Relaxant 1 », elle se déroule automatiquement en suivant une durée paramétrée par l'utilisateur ou paramétrée par défaut, par exemple 45 s.

Le passage d'une phase à l'autre est uniquement conditionné par le temps écoulé (durée). Cependant une phase peut être interrompue à tout moment via l'IHM 7 (écran tactile 72 ou Smartphone 71). A noter aussi que les actionneurs du siège 30 sont pilotés automatiquement par l'organe de commande 2 mais que le siège 30 conserve la possibilité d'être manipulé manuellement pour des raisons de confort et/ou de sécurité.

Dans la phase « Relaxant 1 », les moyens de chauffage 39 et 35, 36, respectivement du siège 30 et du chauffe-nuque 33 ; sont activés par l'organe de commande 2 pour des températures de consigne paramétrées (via l'IHM 7). L'organe de commande 2 actionne le siège 30 pour l'amener progressivement de la position d'accueil (dossier 32 sensiblement droit) à une position inclinée (dossier 32 incliné vers l'arrière d'un angle d'inclinaison paramétré déterminé), et le repose-mollet 34, pour son déploiement depuis sa position rétractée sous l'assise 31 du siège 30 jusqu'à une position complètement déployée. L'organe de commande 2 diminue progressivement l'intensité de l'éclairage d'ambiance à l'intérieur de l'habitacle pour l'amener progressivement à un seuil minimum ainsi que l'éclairage diffusé par les rampes lumineuses 53 fixées sous le pavillon 11.

En même temps, l'organe de commande 2 augmente progressivement l'intensité lumineuse des moyens d'éclairage 54 disposés sous le siège 30 pour créer un effet de flottement.

L'organe de commande 2 active les moyens de massage 38 disposés dans le dossier 32, l'assise 31 et le repose-mollet 34 suivant un cycle de massage « doux » (faible pression). L'organe de commande 2 agit sur l'organe générateur de son 4 pour que le son qui était spatialisé par les haut-parleurs 40 disposés dans l'habitacle, soit progressivement « déplacé » dans la paire de haut-parleurs 37 disposée au niveau de la fonction appui-tête 33. Ce déplacement progressif du son est synchronisé avec la réduction de la lumière d'ambiance et la mise en position allongée du siège 30. Le son diffusé dans l'appui-tête 33 est une séquence musicale « relaxante ». La fragrance diffusée par le diffuseur 60 est un parfum apte à s'accorder avec l'ambiance rendue par la séquence musicale.

La cinquième phase 500, désignée « Relaxant 2 », représente l'état stabilisé de la phase 400 « Relaxant 1 ». Par état stabilisé, on entend que tous les organes 3 à 6 et équipements associés qui était en cours d'atteinte d'une consigne, ont atteint leur consigne et maintienne cette consigne pendant une durée déterminée (90 s) : le siège 30 est incliné, le repose-mollet 34 est déployé, les moyens d'éclairage 54 disposés sous le siège 30 sont activés, les moyens d'éclairage d'ambiance de l'habitacle 51, 52 et 53 sont activés à une intensité lumineuse inférieure à celle des moyens d'éclairage 54 disposés sous le siège (sensation de flottement), le son est concentré dans les haut-parleurs 37 de l'appui-tête 33, le programme de massage est en cycle doux et le diffuseur de parfum 60 diffuse une fragrance relaxante en continu.

Une sixième phase 600 désignée « Dynamisant », succède à la phase Relaxant 2. Elle a pour but de ramener progressivement l'utilisateur à un état propice à la conduite.

Pour que le conducteur puisse sortir de la phase « Relaxant 2 », il doit être progressivement dynamisé jusqu'à être placé en position de conduite. Tout comme la phase « Relaxant 1 », il s'agit d'une phase de transition dont la durée est par exemple de 45 s. L'organe de commande 2 agit sur l'organe générateur de son 4 pour déplacer le son de nouveau vers les haut-parleurs 40 de l'habitacle mais cette fois avec une séquence musicale plus tonique (rythmée). L'organe de commande 2 sélectionne un programme de massage plus dur. L'organe de commande 2 réduit les consignes de température du chauffe-nuque 33 et du siège 30. Il commande le siège 30 de manière à ce qu'il se redresse progressivement et augmente progressivement l'intensité des moyens d'éclairage de l'habitacle 51, 52 et du pavillon 53.

Dans cette phase, comme pour la phase « Relaxant 1 », c'est l'effet positif et complémentaire de tous les organes 3 à 6 et équipements en action qui procure la sensation dynamisante/relaxante.

Au terme de la phase « Dynamisant », le conducteur est invité à sortir du véhicule 1 ou à démarrer son véhicule (Phase Départ 700).

En gardant à l'esprit que les organes et équipement utilisés doivent être toujours coordonnés, il est possible de mettre en scène d'autres prestations comme par exemple une prestation de travail (véhicule à l'arrêt) : les informations affichées sur l'écran de l'ordinateur portable de l'utilisateur du véhicule, pouvant être déportées sur le pare-brise faisant alors office d'écran déporté. A cet effet, une partie du pare-brise est apte à s'opacifier pour offrir une surface d'affichage comparable à celle d'un écran d'ordinateur.

L'opacification des surfaces vitrées peut être également appliquée pour assombrir les vitres des portes arrière et lunette arrière pour participer à une ambiance relaxante.

Enfin, en complément de la répartition du son dans l'habitacle, une même séquence sonore, mémorisée, peut être traitée par le calculateur pour offrir une tonalité différente en fonction de l'ambiance désirée.

Une bibliographie est donnée, ci-après, référençant les principaux articles sur lesquels se base la présente invention pour étayer l'approche multisensorielle et justifier de l'importance de considérer les quatre sens suivants : le toucher, la vue, l'odorat et l'ouïe pour la création d'un scénario santé bien-être.
- Citrin, A.V., Stern, D.E., Spangenberg, E.R. and Clark, M.J. (2003), "Consumer need for tactile input: an internet retailing challenge", Journal of Business Research, Vol. 56 No. 11, pp. 915-22 ;
- Fiore, A.M., Yah, X. and Yoh, E. (2000), "Effects of a product display and environmental fragrancing on approach responses and pleasurable experiences", Psychology Marketing, Vol. 17, pp. 27-54 ;
- Garlin, F.V. and Owen, K. (2006), "Setting the tone with a tune: a meta-analytic review of the effects of background music in retail settings", Journal of Business Research, Vol. 59, pp. 755-64 ;
- Goldkuhl, L. and Styfve'n, M. (2007), "Scenting the scent of service success", European Journal of Marketing, Vol. 41 Nos 11/12, pp. 1297-305 ;
- Hulten, B., Broweus, N. and van Dijk, M. (2009), Sensory Marketing, Palgrave Macmillan, Basingstoke ;
- Hultén, B. Sensory marketing: the multi-sensory brand-experience concept, European Business Review, Vol. 23 No. 3, 2011, pp. 256-273 ;
- Joy, A., Sherry Jr. J. F., Speaking of art as embodied imagination: a multisensory approach to understanding aesthetic experience, Journal of Consumer Research, Vol. 30, 2003, pp. 259-282 ;
- Peck, J. and Wiggins, J. (2006), "It just feels good: customers' affective response to touch and itsinfluence on persuasion", Journal of Marketing, Vol. 70, pp. 56-69 ;
- Orth, U.R. and Malkewitz, K. (2008), "Holistic package design and consumer brand impressions", Journal of Marketing, Vol. 72, May, pp. 64-81 ;
- Smith, P. and Burns, D.J. (1996), "Atmospherics and retail environments: the case of the "Power Aisle"', International Journal of Retail & Distribution Management, Vol. 24 No. 1, pp. 7-14 ;
- Sweeney, C.J. and Wyber, F. (2002), "The role of cognitions and emotions in the music approach-avoidance behaviour relationship", Journal of Services Marketing, Vol. 16 No. 1, pp. 51-70 ;
- Définition du bien être : "http://www.larousse.fr/dictionnaires/francais/bien-être/9159 (référence du 13 décembre 2012).

## Revendications

1. Procédé de commande d'un ensemble d'organes fonctionnels et équipements associés d'un véhicule (1), ledit ensemble comportant un premier organe (3) comportant au moins un siège motorisé (30), disposé dans une zone déterminée de l'habitacle du véhicule (1), ledit siège (30) étant apte à prendre plusieurs positions déterminées, un deuxième organe générateur de son (4) comportant des haut-parleurs (37, 40) aptes à sonoriser une ou plusieurs zones déterminées du véhicule (1), un troisième organe (5) générateur de lumière comportant des moyens d'éclairage (50) aptes à éclairer une ou plusieurs zones déterminées du véhicule, et un quatrième organe (6) de traitement de l'air de l'habitacle comportant un diffuseur (60) d'au moins une fragrance dans l'habitacle apte à être couplé au dispositif de climatisation et de ventilation (61) du véhicule (1), ledit procédé consistant à commander de manière coordonnée chacun des premier, deuxième, troisième et quatrième organes (3 à 6) suivant un enchaînement de phases d'un scénario prédéfini dans lequel chacune des phases du scénario implique l'ensemble des premier, deuxième, troisième et quatrième organes (3 à 6), ledit procédé étant **caractérisé en ce qu'**il consiste, préalablement à l'installation de l'utilisateur dans le siège (30) du véhicule :
- à sélectionner au moins une zone à l'intérieur de l'habitacle dans laquelle l'utilisateur souhaite s'asseoir ;
- à sélectionner un scénario prédéfini à associer à ladite zone ;
- à pré-conditionner le siège (30) associé à ladite zone et les deuxième, troisième et quatrième organes (4 à 6) en fonction du scénario sélectionné ;
et **en ce que** ledit scénario est paramétrable et contrôlable par l'utilisateur à partir d'au moins une interface homme machine (71).

2. Procédé de commande selon la revendication 1, **caractérisé en ce qu'**il consiste :
- à paramétrer le scénario sélectionné en fonction des préférences de l'utilisateur.

3. Procédé de commande selon l'une des revendications 1 ou 2, **caractérisé en ce qu'**il consiste à activer le scénario quand l'utilisateur entre ou s'apprête à rentrer dans le véhicule (1).

4. Véhicule (1) comportant un ensemble d'organes fonctionnels et équipements associés, ledit ensemble comportant un premier organe (3) comportant au moins un siège motorisé (30), disposé dans une zone déterminée de l'habitacle du véhicule (1), ledit siège (30) étant apte à prendre plusieurs positions déterminées, un deuxième organe générateur de son (4) comportant des haut-parleurs (37, 40) aptes à sonoriser une ou plusieurs zones déterminées du véhicule (1), un troisième organe (5) générateur de lumière comportant des moyens d'éclairage (50) aptes à éclairer une ou plusieurs zones déterminées du véhicule, et un quatrième organe (6) de traitement de l'air de l'habitacle comportant un diffuseur (60) d'au moins une fragrance dans l'habitacle apte à être couplé au dispositif de climatisation et de ventilation (61) du véhicule (1), ledit véhicule (1) comportant en outre un organe de commande (2) apte à piloter chacun des premier, deuxième, troisième et quatrième organes (3 à 6) de manière coordonnée pour créer une ambiance déterminée à l'intérieur du véhicule ; ledit organe de commande (2) implémentant un scénario prédéfini et paramétrable, **caractérisé en ce que** ledit véhicule (1) comportant au moins une interface homme machine (7), couplée à l'organe de commande (2), permettant à au moins un utilisateur du véhicule de communiquer avec ledit organe de commande (2) pour paramétrer et piloter ledit scénario ; le siège (30) et le scénario associé au siège (30), étant sélectionnables à partir d'un menu affichable par l'interface homme machine (71).

5. Véhicule (1) selon la revendication 4, **caractérisé en ce que** les haut-parleurs comportent des haut-parleurs (40) répartis dans l'habitacle, aptes à sonoriser tout ou partie de l'habitacle, et des haut-parleurs (37) disposés dans la partie du siège (30) formant appui-tête (33) ; les haut-parleurs (37, 40) étant aptes à répartir spatialement le son dans l'habitacle entre les haut-parleurs (40) de l'habitacle et les haut-parleurs (37) du siège (30).

6. Véhicule (1) selon l'une des revendications 4 ou 5, **caractérisé en ce que** les moyens d'éclairage (50) comportent des moyens d'éclairage (51 à 54) répartis dans l'habitacle et des moyens d'éclairage (57) disposés sur les rétroviseurs extérieurs (16) du véhicule (1).

7. Véhicule (1) selon l'une des revendications 4 à 6, **caractérisé en ce qu'**il comporte en outre un dispositif (62) de dépollution de l'habitacle comportant un dispositif de purification de l'air à l'intérieur de l'habitacle et/ou un dispositif de désinfection des surfaces à l'intérieur de l'habitacle.

## Patentansprüche

1. Verfahren zur Steuerung einer Einheit von Funktionselementen und dazu gehörender Ausstattungen eines Fahrzeugs (1), wobei die Einheit ein erstes Element (3) umfasst, das mindestens einen motorisierten Sitz (30) umfasst, der in einer bestimmten Zone des Innenraums des Fahrzeugs (1) angeordnet ist, wobei der Sitz (30) geeignet ist, um mehrere bestimmte Positionen einzunehmen, ein zweites Element (4) zum Erzeugen von Schall, das Lautsprecher (37, 40) umfasst, die angepasst sind, um eine oder mehrere bestimmte Zonen des Fahrzeugs (1) zu beschallen, ein drittes Element (5), das Licht erzeugt, das Beleuchtungsmittel (50) umfasst, die geeignet sind, um eine oder mehrere bestimmte Zonen des Fahrzeugs zu beleuchten, und ein viertes Element (6) zur Luftbehandlung des Innenraums, das einen Verteiler (60) mindestens eines Dufts in dem Fahrzeug umfasst, der geeignet ist, um mit der Klima- und Belüftungsanlage (61) des Fahrzeugs (1) gekoppelt zu sein, Verfahren, das darin besteht, jedes des ersten, zweiten, dritten und vierten Elements (3 bis 6) gemäß einer Abfolge von Phasen eines vordefinierten Szenarios koordiniert zu steuern, bei dem jede der Phasen des Szenarios die Einheit des ersten, zweiten, dritten und vierten Elements (3 bis 6) einbezieht, Verfahren **dadurch gekennzeichnet, dass** es darin besteht, vor der Installation des Benutzers in dem Sitz (30) des Fahrzeugs:
- mindestens eine Zone im Inneren des Innenraums, in der sich der Benutzer setzen will, auszuwählen;
- ein vordefiniertes Szenario auszuwählen, das mit der Zone zu assoziieren ist;
- den Sitz (30), der mit der Zone und dem zweiten, dritten und vierten Organ (4 bis 6) assoziiert ist, in Abhängigkeit von dem ausgewählten Szenario vorzukonditionieren;
und dass das Szenario durch den Benutzer ausgehend von mindestens einer Mensch-Maschinen-Schnittstelle (71) parametrierbar und steuerbar ist.

2. Verfahren zur Steuerung nach Anspruch 1, **dadurch gekennzeichnet, dass** es aus Folgendem besteht:
- Parametrieren des ausgewählten Szenarios in Abhängigkeit von den Vorlieben des Benutzers.

3. Verfahren zur Steuerung nach einem der Ansprüche 1 oder 2, **dadurch gekennzeichnet, dass** es darin besteht, das Szenario zu aktivieren, wenn der Benutzer in das Fahrzeug einsteigt oder sich anstellt, in das Fahrzeug (1) einzusteigen.

4. Fahrzeug (1), das eine Einheit von Funktionsorganen und dazugehörenden Ausstattungen umfasst, wobei die Einheit ein erstes Element (3) umfasst, das mindestens einen motorisierten Sitz (30) umfasst, der in einer bestimmten Zone des Innenraums des Fahrzeugs (1) angeordnet ist, wobei der Sitz (30) geeignet ist, um mehrere bestimmte Positionen einzunehmen, ein zweites Element (4) zur Schallerzeugung, das Lautsprecher (37, 40) umfasst, die geeignet sind, um eine oder mehrere bestimmte Zonen des Fahrzeugs (1) zu beschallen, ein drittes Element (5) zum Erzeugen von Licht, das Beleuchtungsmittel (50) umfasst, die geeignet sind, um eine oder mehrere bestimmte Zonen des Fahrzeugs zu beleuchten, und ein viertes Element (6) zur Behandlung der Luft des Innenraums, das einen Verteiler (60) mindestens eines Dufts in dem Innenraum umfasst, der geeignet ist, um mit der Klima- und Belüftungsanlage (61) des Fahrzeugs (1) gekoppelt zu sein, wobei das Fahrzeug (1) außerdem ein Steuerelement (2) umfasst, das geeignet ist, um jedes des ersten, zweiten, dritten und vierten Elements (3 bis 6) koordiniert zu steuern, um eine bestimmte Umgebung in dem Inneren des Fahrzeugs zu schaffen; wobei das Steuerelement (2) ein vordefiniertes und parametrierbares Szenario umsetzt, **dadurch gekennzeichnet, dass** das Fahrzeug (1), das mindestens eine Mensch-Maschinen-Schnittstelle (7) umfasst, die mit dem Steuerelement (2) gekoppelt ist, die es dem mindestens einen Benutzer des Fahrzeugs erlaubt, mit dem Steuerelement (2) zu kommunizieren, um das Szenario zu parametrieren und zu steuern; wobei der Sitz (30) und das mit dem Sitz (30) assoziierte Szenario ausgehend von einem Menü auswählbar sind, das auf der Mensch-Maschinen-Schnittstelle (71) auswählbar ist.

5. Fahrzeug (1) nach Anspruch 4, **dadurch gekennzeichnet, dass** die Lautsprecher Lautsprecher (40) umfassen, die in dem Innenraum verteilt sind, die geeignet sind, um einen Teil oder den gesamten Innenraum zu beschallen, und Lautsprecher (37), die in dem Teil des Sitzes (30), der eine Kopfstütze (33) bildet, angeordnet sind; wobei die Lautsprecher (37, 40) geeignet sind, um den Schall in dem Innenraum räumlich zwischen den Lautsprechern (40) des Innenraums und den Lautsprechern (37) des Sitzes (30) zu verteilen.

6. Fahrzeug (1) nach einem der Ansprüche 4 oder 5, **dadurch gekennzeichnet, dass** die Beleuchtungsmittel (50) Beleuchtungsmittel (51 bis 54) umfassen, die in dem Innenraum verteilt sind, und Beleuchtungsmittel (57), die auf den externen Rückspiegeln (16) des Fahrzeugs (1) angeordnet sind.

7. Fahrzeug (1) nach einem der Ansprüche 4 bis 6, **dadurch gekennzeichnet, dass** es außerdem eine Vorrichtung (62) zur Sanierung des Innenraums umfasst, die eine Vorrichtung zum Reinigen der Luft im Inneren des Innenraums und/oder eine Vorrichtung zur Desinfektion der Oberflächen in dem Inneren des Innenraums umfasst.

## Claims

1. A method for controlling an assembly of functional members and associated equipment of a vehicle (1), said assembly comprising a first member (3) comprising at least one motorised seat (30), arranged in a predetermined area of the passenger compartment of the vehicle (1), said seat (30) being capable of adopting a plurality of predetermined positions, a second member that generates sound (4) comprising loudspeakers (37, 40) capable of producing sound in one or more predetermined areas of the vehicle (1), a third member (5) that generates light, comprising lighting means (50) capable of lighting one or more predetermined areas of the vehicle, and a fourth member (6) for treating the air of the passenger compartment, comprising a diffuser (60) of at least one fragrance in the passenger compartment, capable of being coupled with the air-conditioning and ventilation device (61) of the vehicle (1), said method consisting in controlling in a coordinated manner each of the first, second, third and fourth members (3 to 6) according to a sequence of phases of a predefined scenario in which each of the phases of the scenario involves all of the first, second, third and fourth members (3 to 6), said method being **characterized in that** it consists, prior to the installation of the user in the seat (30) of the vehicle:
- in selecting at least one area in the interior of the passenger compartment in which the user wishes to sit down;
- in selecting a predefined scenario to associate with said area;
- in pre-conditioning the seat (30) associated with said area and the second, third and fourth members (4 to 6) as a function of the selected scenario;
and **in that** said scenario is parameterizable and controllable by the user from at least one man-machine interface (17).

2. The method for controlling according to Claim 1, **characterized in that** it consists:
- in parameterizing the selected scenario as a function of the user's preferences.

3. The method for controlling according to one of Claims 1 or 2, **characterized in that** it consists in activating the scenario when the user enters or prepares to re-enter the vehicle (1).

4. A vehicle (1) comprising an assembly of functional members and associated equipment comprising a first member (3) comprising at least one motorised seat (30), arranged in a predetermined area of the passenger compartment of the vehicle (1), said seat (30) being capable of adopting a plurality of predetermined positions, a second member that generates sound (4) comprising loudspeakers (37, 40) capable of producing sound in one or more predetermined areas of the vehicle (1), a third member (5) that generates light comprising lighting means (50) capable of lighting one or more predetermined areas of the vehicle, and a fourth member (6) for treating the air of the passenger compartment, comprising a diffuser (60) of at least one fragrance in the passenger compartment, capable of being coupled with the air-conditioning and ventilation device (61) of the vehicle (1), said vehicle (1) further comprising a control member (2) capable of controlling each of the first, second, third and fourth members (3 to 6) in a coordinated manner so as to create predetermined ambiance in the interior of the vehicle; said control member (2) implementing a predefined and parameterizable scenario, **characterized in that** said vehicle (1) comprising at least one man-machine interface (7), coupled to the control member (2), permitting at least one user of the vehicle to communicate with said control member (2) to parameterize and control said scenario; the seat (30) and the scenario associated with the seat (30) being able to be selected from a menu which is able to be displayed by the man-machine interface (71).

5. The vehicle (1) according to Claim 4, **characterized in that** the loudspeakers comprise loudspeakers (40) distributed in the passenger compartment, capable of producing sound in all or part of the passenger compartment, and loudspeakers (37) arranged in the part of the seat (30) forming a headrest (33); the loudspeakers (37, 40) being capable of distributing spatially the sound in the passenger compartment between the loudspeakers (40) of the passenger compartment and the loudspeakers (37) of the seat (30) .

6. The vehicle (1) according to one of Claims 4 or 5, **characterized in that** the lighting means (50) comprise lighting means (51 to 54) distributed in the passenger compartment and lighting means (57) arranged on the exterior rear-view mirrors (16) of the vehicle (1).

7. The vehicle (1) according to one of Claims 4 to 6, **characterized in that** it further comprises a device (62) for depollution of the passenger compartment comprising a device for purification of the air in the interior of the passenger compartment and/or a device for disinfection of the surfaces in the interior of the passenger compartment.
